# EUROPÄISCHE PATENTANMELDUNG

(11) **EP 1 775 121 A1**
(43) Veröffentlichungstag der Anmeldung: **18.04.2007**
(21) Anmeldenummer: 05405577.7
(22) Anmeldetag: 11.10.2005
(51) Int. Cl.: B32B 27/32

(54) **Deckelband für leicht aufreissbare Dosenverschlüsse**

(71) Anmelder: Alcan Technology & Management Ltd., 8212 Neuhausen am Rheinfall (CH)
(72) Erfinder: Dietrich, Christoph, 78224 Singen (DE)

(57) **Zusammenfassung**

Ein Deckelband (30) für sterilisier- und nicht sterilisierfähige, leicht aufreissbare Dosenverschlüsse zur Verpackung aggressiver Füllgüter weist eine Metallfolie (36) mit einer siegelfähigen Beschichtung (38a, 38b, 38c) mit Polyolefinen als wesentlichen Bestandteil auf. Die siegelfähige Beschichtung (38a, 38b, 38c) enthält wenigstens einen als Protonenfänger wirkenden Zusatzstoff (39) als Korrosionsschutz für die Metallfolie (36). Das Deckelband ist zum Verpacken von aggressiven Füllgütern mit einem pH < 5 geeignet.

## Beschreibung

Die Erfindung betrifft ein Deckelband für sterilisier- und nicht sterilisierfähige, leicht aufreissbare Dosenverschlüsse zur Verpackung aggressiver Füllgüter, mit einer eine siegelfähige Beschichtung mit Polyolefinen als wesentlichen Bestandteil.

Ein Deckelband aus Aluminium für sterilisier- und nicht sterilisierfähige, leicht aufreissbare Dosenverschlüsse ist unter der Markenbezeichnung ALUFIX^{®} RE-TORT bekannt. Das Kernstück dieses Deckelverschluss-System ist eine optimal verschliessende Membran aus rezyklierbarer Aluminiumfolie, welche je nach Bedarf verformt, geprägt und/oder bedruckt auf einen Aluminium- oder Stahlring gesiegelt wird. Die Membran lässt sich leicht, ohne den Inhalt zu verschütten und ohne scharfe Kanten zu erzeugen, wieder abziehen. Dieses anwenderfreundliche System ist auch für aggressive Füllgüter einsetzbar und wird u. a. zum Verschliessen von Lebensmittel und Tiemahrung enthaltenden Portionenverpackungen verwendet.

Bei äusserst aggressiven Füllgütem mit einem pH < 5, wie z. B. bei bestimmten Fischkonserven oder bei Tomatenmark, besteht die Gefahr einer Korrosion der Metallfolie durch diffundierende Fülfgutbestandteüe, beispielsweise Säuren. Eine durch Korrosion angegriffene Deckelmembran führt zu einer Ablagerung von Korrosionsprodukten und kann zu einer lokal undichten Stelle im Siegelbereich oder zu einem lokalen Durchbruch der Membran und damit zu einem vorzeitigen Verderben von Füllgut führen.

Korrosionsprobleme können auch bei Verpackungen von pharmazeutischen Produkten, wie z. B. salicytsäurehaltigen Substanzen, sowie bei Verpackungen von säurehaltigen Batterien auftreten.

Der Erfindung liegt die Aufgabe .zugrunde, ein Deckelband der eingangs genannten Art zu schaffen, welches bei äusserst aggressiven Füllgütern mit einem pH < 5 einen im Vergleich zu Deckelbändem nach dem Stand der Technik verbesserten Korrosionsschutz bieten.

Zur erfindungsgemässen Lösung der Aufgabe führt, dass die siegelfähige Beschichtung wenigstens einen als Protonenfänger wirkenden Zusatzstoff als Korrosionsschutz für die Metallfolie enthält.

Metallfolien können Stahlfolien, Weissblechfiolien und insbesondere Aluminiumfolien sein.

Die siegelfähige Beschichtung enthält bevorzugt wenigstens ein Oxid oder Hydroxid eines Metalls aus der Gruppe der Alkali- und Erdalkalimetalle oder des Aluminiums als Protonenfänger. Als Protonenfänger besonders bevorzugt sind Aluminiumoxid (Al₂O₃) und Aluminiumhydroxid (Al(OH)₃). Weitere geeignete, als Protonenfänger wirkende Zusatzstoffe sind Kalziumoxid (CaO), Kalziumhydroxid (Ca(OH)₂), Magnesiumoxid (MgO) oder Magnesiurnhydroxid (Mg(OH)₂).

Bevorzugt enthält die siegelfähige Beschichtung 0,5 bis 50 Gew.-%, vorzugsweise 10 bis 25 Gew.-%, insbesondere 15 bis 18 Gew.-% Al₂O₃, Al(OH)₃, CaO, Ca(OH)₂, MgO oder Mg(OH)₂.

Die Korngrösse der als Protonenfänger wirkenden Zusatzstoffe ist bevorzugt grösser als 1 nm, insbesondere grösser als 20 nm, vorzugsweise grösser als 100 nm.

Die Komgrösse der als Protonenfänger wirkenden Zusatzstoffe ist bevorzugt kleiner als 10 µm, insbesondere kleiner als 1 µm, vorzugsweise kleiner als 0,5 µm.

Das Polyolefin der siegelfähigen Beschichtung besteht bevorzugt aus Polyethylen (PE) und/oder aus Polypropylen (PP) und die Beschichtung ist insbesondere eine Extrusionsbeschichtung.

Das Polyolefin der siegelfähigen Beschichtung kann aus einer einzigen Schicht oder aus mehreren Schichten bestehen.

Besonders bevorzugt ist ein Deckelband, bei dem das Polyolefin der siegetfähigen Beschichtung eine Coextrusionsschicht aus wenigstens zwei Schichten ist, wobei die äusserste, von der Metallfolie am weitesten entfernte Schicht im wesentlichen keine als Protonenfänger wirkende Zusatzstoffe enthält. Mit dieser Massnahme wird eine glatte Oberfläche erzeugt, so dass der Reibungskoeffizient und das Siegelverhalten des erfindungsgemässen Deckelbandes demjenigen herkömmlicher Deckelbänder entspricht. Durch das Fehlen der Zusatz stoffe wie Al₂O₃ in der äussersten Schicht ergibt sich im Vergleich zu herkömmlichen Deckelbändem bei der Verarbeitung auch keine Abrasion an Formstempeln oder anderen Maschinenkomponenten.

Die dem Polyolefin zugewandte Seite der Metallfolie ist beispielsweise mit einem Haftvermittler und/oder Primer, zweckmässigerweise mit einem Haftharz, insbesondere mit einem Haftharz auf Polyolefinbasis, beschichtet.

Die der siegelfähigen Beschichtung abgewandte Seite der Metallfolie kann mit einem Grundlack beschichtet, bedruckt und mit einem Schutzlack versehen sein. Die Deckelfolie, die je nach Bedarf auch verformt und/oder geprägt sein kann, wird als peelbarer Deckel auf einen üblicherweise aus Aluminium oder aus Stahl gefertigten Deckelring gesiegelt. Der Deckelring wird später auf den Rand eines mit Füllgut gefüllten Behälter aufgebördelt.

Das erfindungsgemässe Deckelband eignet sich insbesondere zum Verpacken von aggressiven Füllgütem mit einem pH < 5.

Weitere Vorteile, Merkmale und Einzelheiten der Erfindung ergeben sich aus der nachfolgenden Beschreibung bevorzugter Ausführungsbeispiele sowie anhand der Zeichnung; diese zeigt schematisch in
- Fig. 1 den Schichtaufbau eines ersten Deckelbandes;
- Fig. 2 den Schichtaufbau eines zweiten Deckelbandes.

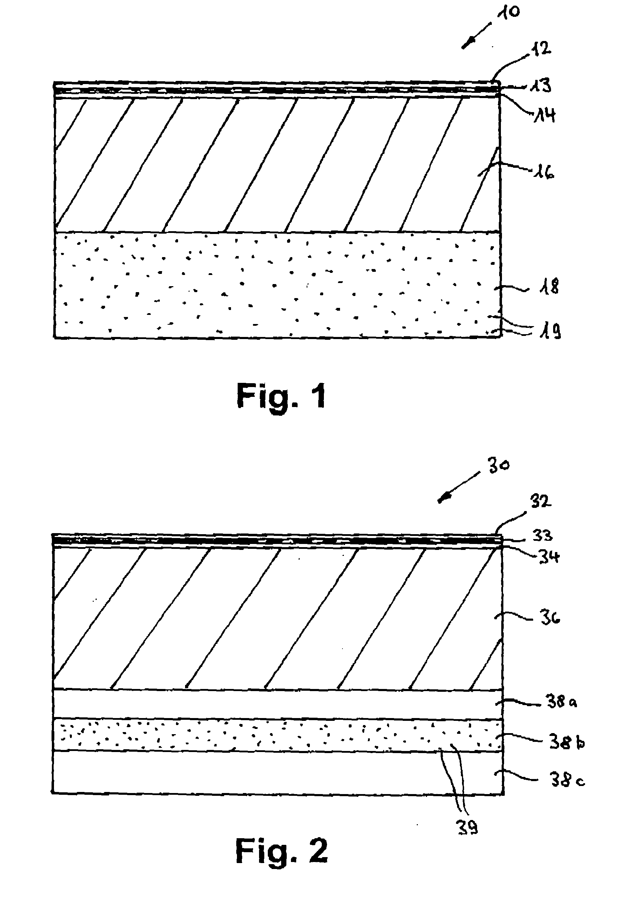

Ein erstes Deckelband 10 zum Verpacken von aggressiven Füllgütern mit einem pH < 5 weist gemäss Fig. 1 den folgenden Schichtaufbau auf:
- 12: Schutzlack
- 13: Bedruckung
- 14: Grundlack
- 16: Aluminiumfolie
- 18: Extrusionsschicht aus Polypropylen, gepfropft mit Maleinsäureanhydrid (PP-MAH)
- 19: Al₂O₃-Partikel als Protonenfänger in Schicht 18

Die Dicke der Aluminiumfolie 16 liegt im allgemeinen zwischen etwa 40 und 100 µm und beträgt bevorzugt 60 bis 80 µm, insbesondere 70 µm.

Die Dicke der Extrusionsschicht mit Haftha2eigenschaften beträgt z. B. 30 µm. der mittlere Durchmesser der zugesetzten CaO-Partikel liegt üblicherweise unter 1 µm. Als Extrusionsschicht mit Haftharzeigenschaften eignen sich z. B. die unter den Markenbezeichnungen ADMER^{®} und OREVAC^{®} bekannten, mit funktionellen Gruppen modifizierten Polyolefine, wie z. B. mit Maleinsäureanhydrid gepfropftes Polypropylen (PP-MAH).

Ein zweites Deckelband 30 zum Verpacken von aggressiven Füllgütem mit einem pH < 5 weist gemäss Fig. 2 den folgenden Schichtaufbau auf:
- 32: Schutzlack
- 33: Bedruckung
- 34: Grundlack
- 36: Aluminiumfolie
- 38a: Schicht aus Polypropylen, gepfropft mit Maleinsäureanhydrid (PP-MAH), als Haftharzschicht
- 38b: Schicht aus Polypropylen (PP)
- 39: CaO-Partikel als Protonenfänger in Schicht 38b
- 38c: Schicht aus Polypropylen (PP), mit Zusatz von Talkum

Die Aluminiumfolie 36 ist beispielsweise 70 µm dick.

Die Schichten 38a, 38b und 38c werden mit einer Gesamtdicke von etwa 30 bis 40 µm coextrudiert und als Coextrusionsschicht direkt mit der Aluminiumfolie verbunden.

Die Dicke der Schichten 38a und 38c beträgt beispielsweise etwa je 4 bis 5 µm, die Schicht 38b ist z. B. 20 µm dick. Der Zusatz von Talkum in der Schicht 38c dient zur Einstellung der für ein Peelen ohne grossen Kraftaufwand gewünschten Siegelfestigkeit eines auf einen Deckelring aufgesiegelten Deckels.

Die Schichtaufbauten der Deckelbänder 10 und 30 stellen nur zwei von vielen möglichen Varianten dar. So können beispielsweise einzelne der üblicherweise als Extrusionsschicht coextrudierten Schichten der siegelfähigen Beschichtung neben Polypropylen (PP) auch aus Polyethylen (PE), PotyethylenlPolypropylen-Mischungen oder aus PE/PP-Copolymeren bestehen und zur Einstellung einer bestimmten Peelkraft nach Siegelung gegen einen Deckelring auch weitere Zusätze wie z.B. Talkum enthalten.

## Patentansprüche

1. Deckelband für sterilisier- und nicht sterilisierfähige, leicht aufreissbare Dosenverschlüsse zur Verpackung aggressiver Füllgüter, mit einer eine siegelfähige Beschichtung (18; 38a, 38b, 38c) mit Polyolefinen als wesentlichen Bestandteil aufweisenden Metallfolie (16, 36),
**dadurch gekennzeichnet, dass**
die siegelfähige Beschichtung (18; 38a, 38b, 38c) wenigstens einen als Protonenfänger wirkenden Zusatzstoff (19, 39) als Korrosionsschutz für die Metallfolie (16, 36) enthält.

2. Deckelband nach Anspruch 1, **dadurch gekennzeichnet, dass** die Metallfolie (16, 36) eine Stahtfolie, eine Weissblechfolie oder insbesondere eine Aluminiumfolie ist.

3. Deckelband nach Anspruch 1 oder 2, **dadurch gekennzeichnet, dass** die siegelfähige Beschichtung (18; 38a, 38b, 38c) wenigstens ein Oxid oder Hydroxid eines Metalls aus der Gruppe der Alkali- und Erdalkalimetalle oder des Aluminiums als Protonenfänger wirkenden Zusatzstoff (19, 39) enthält.

4. Deckelband nach Anspruch 3, **dadurch gekennzeichnet, dass** die siegelfähige Beschichtung (18; 38a, 38b, 38c) Aluminiumoxid (Al₂O₃) oder Aluminiumhydroxid (Al(OH)₃) als Protonenfänger wirkenden Zusatzstoff (19, 39) enthält.

5. Deckelband nach Anspruch 4, **dadurch gekennzeichnet, dass** das die siegelfähige Beschichtung (18; 38a, 38b, 38c) 0,5 bis 50 Gew.-%, vorzugsweise 10 bis 26 Gew,-%, insbesondere 15 bis 18 Gew.-% Al₂O₃ oder AI(OH)₃ als Protonenfänger wirkenden Zusatzstoff (19, 39) enthält.

6. Deckelband nach Anspruch 3, **dadurch gekennzeichnet, dass** die siegelfähige Beschichtung (18; 38a, 38b, 38c) Kalziumoxid (CaO), Kalziumhydroxid (Ca(OH)₂), Magnesiumoxid (MgO) oder Magnesiumhydroxid (Mg(OH)₂) als Protonenfänger wirkenden Zusatzstoff (19, 39) enthält.

7. Deckelband nach Anspruch 6, **dadurch gekennzeichnet, dass** das die siegelfähige Beschichtung (18; 38a, 38b, 38c) 0,5 bis 50 Gew.-%, vorzugsweise 10 bis 25 Gew.-%, insbesondere 15 bis 18 Gew.-% CaO, Ca(OH)₂, MgO oder Mg(OH)₂ als Protonenfänger wirkenden Zusatzstoff (19, 39) enthält.

8. Deckelband nach einem der Ansprüche 1 bis 7, **dadurch gekennzeichnet, dass** das Polyolefin der siegelfähige Beschichtung (18; 38a, 38b, 38c) aus Polyethylen (PE) und/oder aus Polypropylen (PP) besteht und die Beschichtung vorzugsweise eine Extrusionsbeschichtung ist.

9. Deckelband nach einem der Ansprüche 1 bis 8, **dadurch gekennzeichnet, dass** das Polyolefin der siegelfähige Beschichtung aus einer einzigen Schicht (18) besteht.

10. Deckelband nach einem der Ansprüche 1 bis 8, **dadurch gekennzeichnet, dass** das Polyolefin der siegelfähige Beschichtung aus mehreren Schichten (38a, 38b, 38c) besteht.

11. Deckelband nach Anspruch 10, **dadurch gekennzeichnet, dass** das Polyolefin der siegelfähigen Beschichtung eine Coextrusionsschicht aus wenigstens zwei Schichten (38a, 38b, 38c) ist, wobei die äusserste, von der Metallfolie (36) am weitesten entfernte Schicht (38c) im wesentlichen keine als Protonenfänger wirkende Zusatzstoffe (39) enthält.

12. Deckelband nach einem der Ansprüche 1 bis 11, **dadurch gekennzeichnet, dass** die dem Polyolefin zugewandte Seite der Metallfolie (16, 36) mit einem Haftvermittler und/oder Primer, vorzugsweise mit einem Haftharz, insbesondere mit einem Haftharz auf Polyolefinbasis, beschichtet ist.

13. Deckelband nach Anspruch 12, **dadurch gekennzeichnet, dass** die dem Haftvermittler und/oder Primer zugewandte Seite des Polyolefins mit einer den als Protonenfänger wirkenden Zusatzstoff (19) enthaltenden Korrosionsschutzschicht (20) beschichtet ist.

14. Verwendung eines Deckelbandes (10, 30) nach einem der vorhergehenden Ansprüche zum Verpacken von aggressiven Füllgütern mit einem pH < 5.
